Europäisches Patentamt

European Patent Office

Office européen des brevets

(19)

(11) Veröffentlichungsnummer : **0 050 782**
**B1**

(12) **EUROPÄISCHE PATENTSCHRIFT**

(45) Veröffentlichungstag der Patentschrift :
03.04.85

(21) Anmeldenummer : 81108197.5

(22) Anmeldetag : 12.10.81

(51) Int. Cl.⁴ : **A 01 N 25/34, A 01 K 27/00**

(54) **Ektoparasitizidhaltige Halsbänder für Haustiere.**

(30) Priorität : 22.10.80 DE 3039881

(43) Veröffentlichungstag der Anmeldung :
05.05.82 Patentblatt 82/18

(45) Bekanntmachung des Hinweises auf die Patenterteilung : 03.04.85 Patentblatt 85/14

(84) Benannte Vertragsstaaten :
AT BE CH DE FR GB IT LI NL SE

(56) Entgegenhaltungen :
US-A- 4 189 467
Derwent Abstracts nr 77247A, 77248A, 77249A,
77250A
Die Akte enthält technische Angaben, die nach dem
Eingang der Anmeldung eingereicht wurden und die
nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : von Bittera, Miklos
Max-Scheler-Strasse 7
D-5090 Leverkusen 3 (DE)
Erfinder : Federmann, Manfred, Dr.
Tersteegenweg 13
D-5600 Wuppertal 1 (DE)
Erfinder : von Gizycki, Ulrich, Dr.
Wiembachallee 24
D-5090 Leverkusen 3 (DE)
Erfinder : Schäpel, Dietmar, Dr.
Johanniterstrasse 15
D-5000 Köln 80 (DE)
Erfinder : Stendel, Wilhelm, Dr.
In den Birken 55
D-5600 Wuppertal 1 (DE)
Erfinder : Voege, Herbert, Dr.
Martin-Buber-Strasse 41
D-5090 Leverkusen 3 (DE)

## 0 050 782

**Beschreibung**

Die vorliegende Erfindung betrifft neue ektoparasitizidhaltige Halsbänder für Haustiere aus Polyurethanen, die Spreitmittel und Ektoparasitizide enthalten.

Die bisher beschriebenen und auch im Handel befindlichen ektoparasitizid wirksamen PVC-Halsbänder für Kleintiere bestehen im allgemeinen aus thermoplastischem Polyvinylchlorid, in welches durch Co-Extrusion ein ektoparasitizider Wirkstoff, z. B., O,O-Dimethyldichlorvinylphosphat, eingearbeitet wurde. Halsbänder auf dieser Basis führen gelegentlich beim Tier zu Hautschäden ; nachteilig ist auch die kurze Anwendungszeit des Bandes infolge des relativ hohen Dampfdruckes von O,O-Dimethyldich-lorvinylphosphat ($1,2 \times 10^{-1}$ mm Hg) ($1,599\,6 \cdot 10^{-1}$ mbar).

In der US-PS 3 852 416 werden Tierhalsbänder auf Basis von plastifizierten, thermoplastischen Polymeren, vorzugsweise weichgemachtem Polyvinylchlorid, beschrieben, welche weniger leicht flüchtige Carbamate als insektizide Wirkstoffe enthalten. Während aus den bisher bekannten ektoparasitizid wirksamen Kunststoffhalsbändern leicht flüchtige Wirkstoffe wie O,O-Dimethyldichlorvinylphosphat rasch direkt in die Gasphase übergehen, diffundieren schwerer flüchtige Ektoparasitizide wie die erwähnten Carbamate langsam aus dem Band heraus und bilden eine weiße, staubförmige Schicht auf seiner Oberfläche. Ein Teil des Wirkstoffes geht durch Sublimation in die Dampfphase über und wirkt dort, ein anderer Teil wird als Staub über das zu behandelnde Tier verteilt.

Das erwähnte Ausblühen bzw. Ausschwitzen des Wirkstoffes an der Oberfläche des Halsbandes ist mit einer Reihe von Nachteilen verbunden.

Bei längerer Lagerung des Halsbandes vor dem Gebrauch diffundiert eine größere Menge des Wirkstoffes an die Oberfläche und reichert sich dort an. Bei der Anwendung befindet sich dann eine sehr hohe Dosis des Ektoparasitizides an der Oberfläche, die zwar für eine gute Sofortwirkung sorgt, jedoch bereits schon an der Grenze der für das Tier toxischen Menge liegen kann.

Der an der Oberfläche vorhandene Wirkstoff wird rasch abgerieben. Die in den tieferen Schichten des Bandes liegende Wirksubstanz diffundiert jedoch nur sehr langsam an die Oberfläche nach. Die Freisetzung des Ektoparasitizides ist also nicht wie gewünscht über einen möglichst langen Zeitraum hinweg linear.

Der an der Oberfläche des Tierhalsbandes befindliche staubförmige, weißliche Wirkstoff verleiht dem Band ein äußerst unansehnliches, staubiges oder verschimmeltes Aussehen.

Die Wirkstoff-Freisetzung wird beim O,O-Dimethyldichlorvinylphosphat und bei Carbamaten durch in PVC übliche Weichmacher, wie Phthalate, Adipate etc., beeinflußt.

Die US-PS 4 189 467 betrifft Tierhalsbänder mit ektoparasitiziden Eigenschaften, die aus 75-98 Gew.-% eines in Wasser nicht quellbaren hydrophoben Polyurethans und aus 2-25 Gew.-% eines ektoparasitiziden Carbamats bestehen. Das Carbamat hat einen Dampfdruck von $10^{-4}$ bis $10^{-6}$ mm Hg bei 20 °C. Die Halsbänder zeigen den Nachteil, daß sie nur sehr wenig Wirkstoff abgeben und bereits nach relativ kurzer Zeit die Wirkstoffabgabe völlig einstellen.

Aus Derwent Abstract 77 247 A (JP-A-53 107 416), 77 248 A (JP-A-53 107 417), 77 249 A (JP-A-53 107 418), 77 250 A (JP-A-53 107 419) sind faserige Materialien bekannt, die mit Pyrethroiden und $C_{16-24}$-Alkoholen, Squalan, Cetylalkohol, Ester von 2-Ethylhexancarbonsäure, Methyl-phenyl-polysiloxan oder Glycerinfettsäureestern getränkt sind und die nach Erhitzen den Wirkstoff verdampfen. Die Wirkungsdauer dieser Systeme ist aber nur kurz und somit nicht für alle Zwecke geeignet.

Die oben erwähnten Schwierigkeiten lassen sich vermeiden, wenn man als Träger für die verschiedenen Wirkstoffe oder deren Kombinationen in Wasser nicht quellbare Polyurethane einsetzt, die bestimmte Menge Spreitmittel enthalten.

Unter spreitenden Ölen werden solche öligen Flüssigkeiten verstanden, die sich auf der Haut besonders gut verteilen. Sie sind als solche in der Kosmetik bekannt. Nach einem Vorschlag von R. Reymer, Pharm. Ind. *32* 577 (1970) können sie z. B. durch ihre Oberflächenspannung gegen Luft charakterisiert werden, die danach weniger als 30 dyn/cm betragen sollte.

Die Erfindung betrifft daher ektoparasitizidhaltige Halsbänder für Haustiere aus hydrophoben in Wasser nicht quellbaren Polyurethanen, die bezogen auf das Polyurethan, 2 bis 30 Gew.-%, vorzugsweise 5 bis 20 Gew.-%, eines Ektoparasitizids oder einer Ektoparasitizidkombination und, bezogen auf das Polyurethan, 5-35 Gew.-%, vorzugsweise 8-25 Gew.-%, eines Spreitmittels enthalten.

Unter « hydrophob » bzw. « nicht quellbar » werden erfindungsgemäß Polyurethane verstanden, welche beim Eintauchen in Wasser von 20 °C im Verlauf von 24 Stunden weniger als 2 Gew.-%, vorzugsweise weniger als 0,5 Gew.-%, an Wasser durch Quellung aufnehmen.

Neben einem technisch unkomplizierten Herstellungsverfahren haben die erfindungsgemäßen Halsbänder für Haustiere vor allem den Vorteil, daß aus ihnen der Wirkstoff über einen Zeitraum von einigen Monaten hinweg kontinuierlich und im wesentlichen linear freigesetzt wird.

Überraschenderweise diffundiert nämlich der Wirkstoff aus dem Halsband in so abgestufter Weise an die Oberfläche, daß er von dort gleichmäßig durch Sublimation bzw. auf mechanischem Wege an die Umgebung abgegeben wird. Es bilden sich keine merklichen Ausblühungen an der Oberfläche, bei längerer Lagerung wird ein gefälliges Aussehen bewahrt und es treten keine Toxizitätsprobleme auf. Der Wirksamkeitszeitraum wird deutlich verlängert bzw. ist durch den gezielten Spreitmittel-Einsatz beeinflu-ßbar.

2

Der Wirkstoff lagert sich an der Oberfläche des Halsbandes nicht in sichtbaren Kristallen ab, so daß die erfindungsgemäßen Halsbänder weder an der Obernoch an der Unterseite ein staubiges Aussehen besitzen. Trotzdem wirken die Halsbänder über einen Zeitraum von mehr als 4 Monaten, wie im Beispielteil näher erläutert wird. Die in vitro-Freisetzungsversuche zeigen, daß aus den erfindungsgemäßen Halsbändern der Wirkstoff auch nach längerer Lagerung kontinuierlich abgegeben wird, während aus einem vergleichbaren Band auf Basis von Polyvinylchlorid die Hauptmenge des Wirkstoffes bereits nach kurzer Zeit herausdiffundiert ist. Danach wird pro Zeiteinheit nur noch eine sehr geringe Menge des Ektoparasitizids freigesetzt.

Als Ektoparasitizide kommen Carbamate mit einem Dampfdruck zwischen ca. $10^{-4}$ und $10^{-6}$ Torr bei 20 °C $(1,333 \cdot 10^{-4}\text{-}1,333 \cdot 10^{-6}$ mbar bei 20 °C) in Betracht. Derartige Verbindungen werden beispielsweise in der US-PS 3 852 416 genannt; ihre Herstellung wird in den US-Patentschriften 2 903 478 und 3 203 853 beschrieben.

Erfindungsgemäß bevorzugt wird 2-Isopropoxyphenyl-N-methyl-carbamat mit einem Dampfdruck von $6,5 \times 10^{-6}$ mm Hg ($8,664\,5 \cdot 10^{-6}$ mbar) als ektoparasitizide Komponente eingesetzt.

Andere erfindungsgemäß geeignete Carbamate sind z. B. 3-Tolyl-N-methylcarbamat, 3,4-Xylyl-N-methylcarbamat, m-(1-Methylbutyl)-phenyl-N-methylcarbamat, (2-Ethylthiomethyl-phenyl)-N-methylcarbamat, 4-Dimethylamino-m-tolyl-N-methylcarbamat, 2,3-Dihydro-2,2-dimethylbenzfuranyl-7-N-methylcarbamat, 2-Dimethylcarbamoyl-3-methyl-5-pyrazolyl-dimethylcarbamat und 2-Dimethylamino-5,6-dimethylpyrimidin-4-yl-dimethylcarbamat.

Als Ektoparasitizide kommen außerdem insbesondere synthetische Pyrethroide, z. B. solche der DE-OS 2 730 515, bevorzugt jedoch 3-Phenoxy-4-fluor-α-cyanobenzyl-2,2-dimethyl-3-[2-(4-chlorphenyl)-2-chlorvinyl]-cyclopropancarboxylat und dessen Isomere, in Frage.

Die Ektoparasitizide können einzeln oder in Kombinationen zur Anwendung gelangen. Der Gehalt an Ektoparasitiziden beträgt 2-30 Gew.-%, vorzugsweise 5-20 Gew.-% bezogen auf das Polyurethan.

Die erfindungsgemäß als Trägermaterial dienenden Polyurethane werden in an sich bekannter Weise durch Umsetzung von Polyisocyanaten mit höhermolekularen, mindestens zwei gegenüber Isocyanaten reaktionsfähigen Gruppen aufweisenden Verbindungen sowie gegebenenfalls niedermolekularen Kettenverlängerungsmitteln und/oder monofunktionellen Kettenabbrechern hergestellt.

Als Ausgangskomponenten bei der Herstellung der Polyurethane kommen aliphatische, cycloaliphatische, araliphatische, aromatische und heterocyclische Polyisocyanate in Betracht, wie sie z. B. von W. Siefken in Liebig's Annalen der Chemie, 562, Seiten 75 bis 136, beschrieben werden. Beispielhaft seien genannt: Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3 und -1,4-diisocyanat sowie beliebige Gemische dieser Verbindungen, 1-Isocyanato-3,3,5-trimethyl-5-isocyanatomethyl-cyclohexan (s. DE-AS 1 202 785 und US-PS 3 401 190), 2,4- und 2,6-Hexahydrotoluylendiisocyanat sowie beliebige Gemische dieser Verbindungen; Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Verbindungen; Diphenylmethan-2,4'- und/oder -4,4'-diisocyanat, Naphthylen-1,5-diisocyanat, Triphenylmethan-4,4',4''-triisocyanat, Polyphenylpolymethylen-polyisocyanate, wie sie durch Anilin-Formaldehyd-Kondensation und anschließende Phosgenierung erhalten und z. B. in den GB-PSen 874 430 und 848 671 beschrieben werden; m- und p-Isocyanatophenyl-sulfonylisocyanate gemäß der US-PS 3 454 606; perchlorierte Arylpolyisocyanate, wie sie z. B. in der DE-AS 1 157 601 und in der US-PS 3 277 138 beschrieben werden; Carbodiimidgruppen aufweisende Polyisocyanate, wie sie in der DE-PS 1 092 007 und in der US-PS 3 152 162 beschrieben werden; Diisocyanate, wie sie in der US-PS 3 492 330 beschrieben werden; Allophanatgruppen aufweisende Polyisocyanate, wie sie z. B. in der GB-PS 994 890, der DE-PS 761 626 und der veröffentlichten holländischen Patentanmeldung 7 102 524 beschrieben werden; Isocyanuratgruppen aufweisende Polyisocyanate, wie sie z. B. in der US-PS 3 001 973, in den DE-PSen 1 022 789, 1 222 067 und 1 027 394 sowie in den DE-OSen 1 929 034 und 2 004 048 beschrieben werden; Urethan gruppen aufweisende Polyisocyanate,wie sie z. B. in der DE-PS 752 261 oder in der US-PS 3 394 164 beschrieben werden; acylierte Harnstoffgruppen aufweisende Polyisocyanate gemäß der DE-PS 1 230 778; Biuretgruppen aufweisende Polyisocyanate, wie sie z. B. in der DE-PS 1 101 394, in den US-PSen 3 124 605 und 3 201 372, sowie in der GB-PS 889 050 beschrieben werden; durch Telomerisationsreaktionen hergestellte Polyisocyanate, wie sie z. B. in der US-PS 3 654 106 beschrieben werden; Estergruppen aufweisende Polyisocyanate, wie sie zum Beispiel in den GB-PSen 965 474 und 1 072 956, in der US-PS 3 567 763 und in der DE-PS 1 231 688 genannt werden; Umsetzungsprodukte der obengenannten Isocyanate mit Acetalen gemäß der DE-PS 1 072 385 und polymere Fettsäurereste enthaltende Polyisocyanate gemäß der US-PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanaten, einzusetzen. Ferner ist es möglich, beliebige Mischungen der vorgenannten Polyisocyanate zu verwenden.

Bevorzugte Polyisocyanate sind im allgemeinen die Toluylendiisocyanate und die Diphenylmethandiisocyanate.

Ausgangskomponenten für die Herstellung der Polyurethane sind ferner Verbindungen mit

3

mindestens zwei gegenüber Isocyanaten reaktionsfähigen Wasserstoffatomen mit einem Molekulargewicht in der Regel von 400-10 000. Hierunter versteht man neben Aminogruppen, Thiolgruppen oder Carboxylgruppen aufweisenden Verbindungen vorzugsweise Polyhydroxylverbindungen, insbesondere zwei bis acht Hydroxylgruppen aufweisende Verbindungen, speziell solche vom Molekulargewicht 800 bis 10 000, vorzugsweise 1 000 bis 6 000, z. B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechenden Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele hierfür seien genannt : Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester.

Als mehrwertige Alkohole kommen z. B. Ethylenglykol, Propylenglykol-(1,2) und -(1,3), Butylenglykol-(1,4) und -(2,3),Hexandiol-(1,6), Octandiol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethyläthan, Pentaerythrit, Chinit, Mannit und Sorbit, Methylglykosid, ferner Diethylenglykol, Triethylenglykol, Tetraethylenglykol, Polyethylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z. B. ε-Caprolacton oder Hydroxycarbonsäuren, z. B. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, 4,4'-Dihydroxy-diphenylpropan, Anilin, Ethanolamin oder Ethylendiamin hergestellt. Auch Sucrosepolyether, wie sie z. B. in den DE-ASen 1 176 358 und 1 064 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z. B. durch Polymerisation von Styrol und Acrylnitril in Gegenwart von Polyethern entstehen (US-PSen 3 383 351, 3 304 273, 3 523 093, 3 110 695, deutsche Patentschrift 1 152 536), sind geeignet, ebenso OH-Gruppen aufweisende Polybutadiene.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischether, Polythioetherester oder Polythioetheresteramide.

Als Polyacetale kommen z. B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diethylenglykol, Triethylenglykol oder Tetraethylenglykol mit Diarylcarbonaten, z. B. Diphenylcarbonat, oder Phosgen hergestellt werden können.

Zu den Polyesteramiden und Polyamiden zählen z. B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend lienearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Vertreter dieser erfindungsgemäß zu verwendenden Verbindungen sind z. B. in High Polymers, Vol. XVI, « Polyurethans, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400-10 000, z. B. Mischungen von Polyethern und Polyestern, eingesetzt werden.

Als gegebenenfalls einzusetzende Ausgangskomponenten kommen auch Verbindungen mit mindestens zwei gegenüber Isocyanaten reaktionsfähigen Wasserstoffatomen von einem Molekulargewicht 32-400 in Frage. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

Als Beispiele für derartige Verbindungen seien genannt : Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glyzerin, Trimethylolpropan, Hexantriol-(1,2,6), Trimethyloläthan, Pentaerythrit, Chinit, Mannit und Sorbit, Diethylenglykol, Triethylenglykol, Tetraethylenglykol, Polyethylenglykole mit einem Molekulargewicht bis 400, Dipropylenglykol, Polypropylenglykole mit einem Molekulargewicht bis 400, Dibutylenglykol, Polybutylenglykole mit einem Molekulargewicht bis 400, 4,4′-Dihydroxy-diphenylpropan, Di-hydroxymethyl-hydrochinon, Äthanolamin, Diäthanolamin, Triäthanolamin, 3-Aminopropanol, Ethylendiamin, 1,3-Diaminopropan, 1-Mercapto-3-aminopropan, 4-Hydroxy- oder -Amino-phthalsäure, Bernsteinsäure, Adipinsäure, Hydrazin, N,N′-Dimethylhydrazin, 4,4′-Diaminodiphenylmethan, Toluylendiamin, Methylen-bis-chloranilin, Methylen-bisanthranilsäureester, Diaminobenzoesäureester und die isomeren Chlorphenylendiamine.

Auch in diesem Fall können Mischungen von verschiedenen Verbindungen mit mindestens zwei gegenüber Isocyanaten reaktionsfähigen Wasserstoffatomen mit einem Molekulargewicht von 32-400 verwendet werden.

Erfindungsgemäß können jedoch auch Polyhydroxylverbindungen eingesetzt werden, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) direkt in situ in den oben genannten, Hydroxylgruppen aufweisenden Verbindungen ablaufen läßt. Derartige Verfahren sind beispielsweise in DE-ASen 1 168 075 und 1 260 142, sowie den DE-OSen 2 324 134, 2 423 984, 2 512 385, 2 513 815, 2 550 796, 2 550 797, 2 550 833 und 2 550 862 beschrieben. Es ist aber auch möglich, gemäß US-PS 3 869 413 bzw. DE-OS 2 550 860 eine fertige wässrige Polymerdispersion mit einer Polyhydroxylverbindung zu vermischen und anschließend aus dem Gemisch das Wasser zu entfernen.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Bei der Auswahl der für die Herstellung des Polyurethans verwendeten höhermolekularen Polyolkomponente ist zu beachten, daß das fertige Polyurethan in Wasser nicht quellbar sein soll. Die Verwendung größerer Mengen an Polyhydroxylverbindungen mit Ethylenoxideinheiten (Polyethylenglykolpolyether oder Polyester mit Diethylen- oder Triethylenglykol als Diolkomponente) ist daher zu vermeiden.

Bevorzugt werden hydrophobe Polyester, insbesondere solche auf Basis von Adipinsäure und Ethylenglykol und/oder Butandiol und/oder Neopentylglykol und/oder Hexandiol, Polycarbonatdiole und Polyetherpolyole auf Basis von Propylenoxid oder Tetrahydrofuran eingesetzt. Zur Hydrophobierung des Polyurethans ist es auch in manchen Fällen zweckmäßig (insbesondere wenn größere Mengen an mineralischen Füllstoffen in das Polyurethan eingearbeitet werden), Rizinusöl als Polyolkomponente mitzuverwenden.

Bei der Herstellung der Polyurethane werden oft Katalysatoren mitverwendet. Als mitzuverwendende Katalysatoren kommen solche der an sich bekannten Art in Frage, z. B. tertiäre Amine, wie Triethylamin, Tributylamin, N-Methyl-morpholin, N-Ethyl-morpholin, N-Cocomorpholin, N,N,N′,N-Tetramethyl-ethylendiamin, 1,4-Diaza-bicyclo-(2,2,2)-octan, N-Methyl-N′-dimethylaminoethyl-piperazin, N,N-Dimethylbenzylamin, Bis-(N,N-diethylaminoethyl)-adipat, N,N-Diethylbenzylamin, Pentamethyldiethylentriamin, N,N-Dimethylcyclohexylamin, N,N,N′,N-Tetramethyl-1,3-butandiamin, N,N-Dimethyl-β-phenylethylamin, 1,2-Dimethylimidazol, 2-Methylimidazol. Als Katalysatoren kommen auch an sich bekannte Mannichbasen aus sekundären Aminen, wie Dimethylamin, und Aldehyden, vorzugsweise Formaldehyd, oder Ketone wie Aceton, Methylethylketon oder Cyclohexanon und Phenolen, wie Phenol, Nonylphenol oder Bisphenol in Frage.

Gegenüber Isocyanatgruppen aktive Wasserstoffatome aufweisende tertiäre Amine als Katalysatoren sind z. B. Triäthanolamin, Triisopropanolamin, N-Methyl-diäthanolamin, N-Ethyl-diäthanolamin, N,N-Dimethyläthanolamin, sowie deren Umsetzungsprodukte mit Alkylenoxiden, wie Propylenoxid und/oder Ethylenoxid.

5

**0 050 782**

Als Katalysatoren kommen ferner Silaamine mit Kohlenstoff-Silizium-Bindungen, wie sie z. B. in der DE-PS 1 229 290 (entsprechend der US-PS 3 620 984) beschrieben sind, in Frage, z. B. 2,2,4-Trimethyl-2-silamorpholin und 1,3-Diethylaminomethyl-tetramethyldisiloxan.

Als Katalysatoren kommen auch stickstoffhaltige Basen wie Tetraalkylammoniumhydroxide, ferner Alkalihydroxide wie Natriumhydroxid, Alkaliphenolate wie Natriummethylat in Betracht. Auch Hexahydrotriazine können als Katalysatoren eingesetzt werden.

Außerdem können auch organische Metallverbindungen, insbesondere organische Zinnverbindungen, als Katalysatoren verwendet werden.

Als organische Zinnverbindungen kommen vorzugsweise Zinn (II)-salze von Carbonsäuren wie Zinn (II)-acetat, Zinn (II)-octoat, Zinn (II)-ethylhexoat und Zinn (II)-laurat und die Zinn (IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverständlich können alle obengenannten Katalysatoren als Gemische eingesetzt werden.

Weitere Vertreter der zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Menge an Verbindungen mit mindestens zwei gegenüber Isocyanaten reaktionsfähigen Wasserstoffatomen von einem Molekulargewicht von 400 bis 10 000, eingesetzt.

Als Spreitmittel oder spreitende Öle kommen folgende Substanzen in Betracht. Silikonöle verschiedener Viskosität ; Fettsäureester, wie Acetylstearat, Laurinsäurehexylester, Dipropylenglykolpelargonat ; Ester verzweigter Fettsäuren mittlerer Kettenlänge mit gestättigten $C_{16}$-$C_{18}$-Fettalkoholen wie Isopropylmyristat, Isopropylpalmitat ; Capryl/Caprinsäureester von gesättigten Fettalkoholen der Kettenlänge $C_{12}$-$C_{18}$, Isopropylstearat, Ölsäuredecylester, Ölsäureoleylester ; wachsartige Fettsäureester wie künstliche Entenbürzeldrüsensenfett, Adipinsäurediisopropylester, letzterem verwandte Estergemische u. a. Triglyceride, wie Capryl/Caprinsäuretriglycerid, Triglyceridgemische mit Pflanzenfettsäuren der Kettenlänge $C_8$-$C_{12}$ oder anderen speziell ausgewählten natürlichen Fettsäuren ; Partialglyceridgemische gesättigter oder ungesättigter eventuell auch hydroxylgruppenhaltiger Fettsäuren, Monoglyceride der $C_8$-$C_{10}$-Fettsäuren und andere.

Fettalkohole, wie Isotridecylalkohol, 2-Octyldodecanol, Cetylstearyl-alkohol, Oleylalkohol ; Fettsäuren, wie Ölsäure, Stearinsäure. Besonders gut geeignete spreitende Öle sind Isopropylmyristat, Isopropylstearat, Isopropylpalmitat, Laurinsäurehexylester, Ölsäuredecylester, Dibutylstearat, Dibutylsebacat, Paraffinöl, Ethylhexylpalmitat/Stearat, bzw. Isotridecylstearat, Isopropylmyristat-Isopropylpalmitat-Isopropylstearat-Gemisch.

Der Gehalt an Spreitmitteln beträgt 5-35 Gew.-%, vorzugsweise 8-25 Gew.-%, bezogen auf das Polyurethan.

Als in den erfindungsgemäßen Halsbändern gegebenenfalls enthaltenen Füll- und Zusatzstoffe sind die in der Polyurethan-Chemie an sich bekannten Stoffe zu verstehen, wie z. B. Füllstoffe und Kurzfasern auf anorganischer oder organischer Basis, färbende Agenzien wie Farbstoffe und Farbpigmente, wasserbindende Mittel, oberflächenaktive feste Substanzen oder pH-stabilisierende Mittel.

Als anorganische Füllstoffe seien beispielsweise Schwerspat, Titandioxid, Quarzsand, Kaolin, Ruß und Mikroglaskugeln genannt. Von den organischen Füllstoffen können z. B. Pulver auf Basis von Polystyrol oder Polyvinylchlorid eingesetzt werden.

Als Kurzfasern kommen z. B. Glasfasern von 0,1 bis 1 mm Länge oder Fasern organischer Herkunft, wie z. B. Polyester oder Polyamidfasern, in Frage. Um den erfindungsgemäßen Halsbändern die gewünschte Färbung zu verleihen, können die für die Einfärbung von Polyurethanen an sich bekannten Farbstoffe oder Farbpigmente auf organischer oder anorganischer Basis verwendet werden, wie z. B. Eisenoxid- oder Chromoxidpigmente, Pigmente auf Phthalocyanin- oder Monoazo-Basis. Das bevorzugte wasserbindende Mittel sind Zeolithe. Als feste oberflächenaktive Substanzen seien z. B. Cellulosepulver, Aktivkohle, Kieselsäurepräparate und Chrysotil-Asbest genannt.

Zur Stabilisierung der Ektoparasitizide gegen einen zu schnellen Zerfall können auch pH-regulierende Stoffe zugesetzt werden, wie z. B. Stearinsäure oder Puffersysteme auf Basis von anorganischen Phosphorsäuresalzen.

Die Herstellung der erfindungsgemäßen ektoparasitizidhaltigen Halsbänder kann nach den in der Polyurethan-Chemie an sich bekannten Verfahren erfolgen, wobei man die erfindungsgemäßen Halsbänder nach thermoplastichen Verarbeitungsverfahren oder auch nach Reaktivverfahren erhalten kann.

Thermoplastische Polyurethane, wie sie durch Umsetzung von Diisocyanaten mit höhermolekularen Dihydroxyverbindungen und niedermolekularen Glykolen als Kettenverlängerungsmittel bei einem NCO/OH-Verhältnis zwischen ca. 0,97 und 1,05 entstehen, beispielsweise in den GB-PSen 1 210 1 270 836, 1 075 274, 1 110 118, 1 025 970, 1 057 018, 1 087 743 und 849 136, den DE-PSen 1 189 268, 1 103 024, 1 106 958 und 1 106 959 sowie den DE-OSen 2 323 393 und 2 418 075 beschrieben.

Man kann den parasitiziden Wirkstoff diesen thermoplastischen Polyurethanen, welche z. B. in granulierter Form vorliegen, zusammen mit den Spreitmitteln in geeigneten Mischvorrichtungen, beispielsweise in Trommeln oder in einem Extruder zusetzen ; es ist aber auch möglich, den Wirkstoff und Spreitmittel direkt bei der Herstellung des Polyurethans, gegebenenfalls im Gemisch mit einer der Ausgangskomponenten, zuzusetzen, beispielsweise in einem Verfahren gemäß DE-OS 2 302 564 (≙ US-PS 3 963 679), wobei Polyisocyanate und Polyhydroxylverbindungen in einer zweiwelligen Schneckenmaschine kontinuierlich miteinander umgesetzt werden. Es ist jedoch hierbei zu beachten, daß die Reaktionstemperatur die Zersetzungstemperatur des als Ektoparasitizid verwendeten Wirkstoffes nicht übersteigt.

Von den in der Polyurethanchemie an sich bekannten und erfindungsgemäß möglichen Herstellungsmethoden unter Verwendung von reaktionsfähigen Gemischen, wie z. B. dem Gieß-, Sprüh- oder Reaktionsspritzgießverfahren, ist das Gießverfahren die erfindungsgemäß bevorzugte Verfahrensweise. Hierbei können die ektoparasitizidhaltigen Halsbänder in an sich bekannter Weise sowohl nach dem Einstufen- als auch nach dem Prepolymer- oder Semiprepolymer-Verfahren hergestellt werden.

Von den Verfahrensvarianten beim Gießverfahren ist das Einstufenverfahren erfindungsgemäß besonders bevorzugt.

In diesem Fall vermischt man höhermolekulare Polyole, ektoparasitiziden Wirkstoff, Spreitmittel, gegebenenfalls Vernetzer sowie Füll- und Zusatzstoffe und schließlich den Katalysator und mischt anschließend die Isocyanatkomponente hinzu.

Die erfindungsgemäßen Halsbänder können nach dem Gießverfahren kontinuierlich oder diskontinuierlich produziert werden. Bei der kontinuierlichen Verfahrensweise wird das ektoparasitizidhaltige Reaktionsgemisch auf ein sich fortbewegendes Band aufgegossen und gegebenenfalls gerakelt. Man erhält eine endlose Bandware, die man anschließend in einzelne Streifen entsprechend den Abmessungen der gewünschten Halsbänder zerteilen kann. Wenn man die Halsbänder diskontinuierlich herstellen will, gießt man das Reaktionsgemisch in offene oder geschlossene Formen geeigneter Abmessungen und läßt es erhärten.

Die Bedingungen während der Reaktion lassen sich auch in der Weise variieren, daß man entweder kompakte oder geschäumte Polyurethane enthält. Wird z. B. Luft ins reaktionsfähige Gemisch eingeschlagen, so erhält man Schaumstoffe.

Bei den Arbeitsweisen nach dem Gießverfahren kann die Förderung, Dosierung und Mischung der Einzelkomponenten oder Komponentengemische mit den für den Fachmann an sich bekannten Vorrichtungen erfolgen.

Erfindungsgemäß können die ektoparasitiziden Wirkstoffe auch spreitmittelhaltigen, lösungsmittelfreien Reaktivsystemen, bestehend aus einer höhermolekularen Polyisocyanatkomponente und einer Polyaminkomponente, zugesetzt werden, wie sie beispielsweise in der DE-OS 2 448 133 beschrieben werden.

Selbstverständlich ist es erfindungsgemäß auch möglich, den Wirkstoff in die Lösung eines Polyurethans oder Polyurethanharnstoffs einzubringen und anschließend das Lösungsmittel zu verdampfen. Auch in diesem Falle müssen höhere Temperaturen vermieden werden, damit keine Zersetzung des Wirkstoffes eintritt. Man verwendet daher zweckmäßigerweise Lösungen von Polyisocyanat-Polyadditionsprodukten in schwach polaren, leicht flüchtigen Lösungsmitteln oder Lösungsmittelgemischen. Derartige sogenannte « Soft-Solvent » -Systeme werden beispielsweise in der US-PS 2 957 852, der GB-PS 1 040 055, der DE-PS 643 811, der DE-OS 1 694 277 (≙ US-PS 3 734 894), den US-PSen 3 609 112, 3 752 786 und 3 936 409, sowie den DE-OSen 2 221 750 (≙ US-PS 3 912 680), 2 221 751 (≙ US-PS 3 867 350) und 2 221 798 (≙ US-PS 3 857 809) beschrieben. Auch polarere Lösungsmittelsysteme (z. B. mit Dimethylformamid oder N-Methylpyrrolidon) sind brauchbar, wenn die Ausheiztemperatur niedrig genug gehalten wird.

Es ist erfindungsgemäß möglich, die Halsbänder auf reiner Polyurethanbasis herzustellen, beispielsweise durch Spritzgießen eines der genannten Thermoplasten oder nach dem Gießverfahren durch Ausreagierenlassen eines reaktiven Zweikomponentensystems in einer geeigneten Form. In vielen Fällen ist es jedoch erwünscht, ein geeignetes Trägermaterial mit einem der oben genannten wirkstoffhaltigen thermoplastischen Polyurethane, Reaktivsysteme oder in leicht verdampfbaren Lösungsmitteln gelösten Einkomponenten-Polyurethane zu imprägnieren und/oder zu beschichten. Als Trägermaterial kommen die verschiedenartigsten Materialien auf Basis von natürlichen und/oder synthetischen Rohstoffen in Frage, wie z. B. Vliese, Gewirke, Gestricke, Gewebe, Matten, geschäumte oder kompakte Kunststoff-Folien, Naturleder oder Kunstleder. Im allgemeinen wird dieses Trägermaterial beim Tierhalsband nach außen getragen, innen befindet sich die Beschichtung mit dem ektoparasitizidhaltigen Polyurethan. Auf diese Weise ist es möglich, dem Tierhalsband praktisch jedes gewünschte Aussehen zu geben.

Die erfindungsgemäßen Tierhalsbänder werden bei Haustieren angewandt, insbesondere bei Hunden und Katzen. Die erfindungsgemäßen Halsbänder können mit Erfolg gegen zahlreiche schädliche tierische Ektoparasiten aus der Klasse der Arachniden und der Klasse der Insekten, die an Hunden und Katzen parasitieren, eingesetzt werden.

Die folgenden Beispiele erläutern die vorliegende Erfindung. Bei den in den Beispielen angegebenen Teilen handelt es sich um Gewichtsteile, sofern nicht anders angegeben ist.

In den nachfolgenden Beispielen werden folgende ektoparrasitizide Wirkstoffe eingesetzt :

Wirkstoff 1 = 2-Isopropoxyphenyl-N-methylcarbamat (Propoxur)

Wirkstoff 2 = 3-Phenoxy-4-fluor-α-cyano-benzyl-2,2-dimethyl-3-[2-(4-chlorphenyl)-2-chlorvinyl]-cyclopropancarboxylat.

**0 050 782**

Beispiel 1

Komponente A

| | |
|---|---|
| Trihydroxypolyether (M.G. 4800) | 39,78 Teile |
| Butandiol-1,4 (Vernetzer) | 5,00 Teile |
| Pigment (Eisenoxid) | 0,50 Teile |
| Zeolith-Paste (1 : 1 in Rizinusöl) | 0,50 Teile |
| Wirkstoff 1 | 11,40 Teile |
| Laurinsäurehexylester | 18,00 Teile |
| Dibutylzinndilaurat | 0,03 Teile |

Komponente B

| | |
|---|---|
| Tripropylenglykol-modifiziertes 4,4'-Diisocyanatodiphenyl-methan, Isocyanatgehalt 23 Gew.-% | 24,80 Teile |

Beispiel 2

Komponente A

| | |
|---|---|
| Trihydroxypolyether (M.G. 4800) | 37,98 Teile |
| Butandiol-1,4 (Vernetzer) | 5,00 Teile |
| Pigment (Eisenoxid) | 0,50 Teile |
| Zeolith-Paste (1 : 1 Rizinusöl) | 0,50 Teile |
| Wirkstoff 1 | 11,40 Teile |
| Isopropylmyristat | 20,00 Teile |
| Dibutylzinndilaurat | 0,02 Teile |

Komponente B

| | |
|---|---|
| Tripropylenglykol-modifiziertes 4,4'-Diisocynatodiphenyl-methan, Isocyanatgehalt 23 Gew.-% | 24,60 Teile |

Beispiel 3

Komponente A

| | |
|---|---|
| Trihydroxypolyether (M.G. 4800) | 31,063 Teile |
| Butandiol-1,4 | 5,000 Teile |
| Pigment (Eisenoxid) | 0,500 Teile |
| Zeolith-Paste (1 : 1 in Rizinusöl) | 0,500 Teile |
| Wirkstoff 1 | 11,400 Teile |
| Wirkstoff 2 | 7,600 Teile |
| Isopropylmyristat | 20,000 Teile |
| Dibutylzinndilaurat | 0,037 Teile |

Komponente B

| | |
|---|---|
| Tripropylenglykol-modifiziertes 4,4'-Diisocyanatodiphenyl-methan, Isocyanatgehalt 23 Gew.-% | 23,90 Teile |

Beispiel 4

Komponente A

| | |
|---|---|
| Trihydroxypolyether (M.G. 4800) | 36,273 Teile |
| Butandiol-1,4 | 5,000 Teile |
| Pigment (Eisenoxid) | 0,500 Teile |
| Zeolith-Paste (1 : 1 in Rizinusöl) | 0,500 Teile |
| Wirkstoff 1 | 11,400 Teile |
| Wirkstoff 2 | 3,800 Teile |
| Ölsäuredecylester | 18,000 Teile |
| Dibutylzinndilaurat | 0,027 Teile |

8

### Komponente B

| | |
|---|---|
| Tripropylenglykol-modifiziertes 4,4'-Diisocyanatodiphenyl-methan, Isocyanatgehalt 23 Gew.-% | 24,500 Teile |

### Beispiel 5

### Komponente A

| | |
|---|---|
| Trihydroxypolyether (M.G. 4800) | 45,5 Teile |
| Butandiol-1,4 | 5,0 Teile |
| Wirkstoff 1 | 15,0 Teile |
| Pigment (Eisenoxid) | 0,5 Teile |
| Zeolith-Paste (1 : 1 in Rizinusöl) | 0,5 Teile |
| Ester einer verzweigten Fettsäure mit gesättigten Fettalkoholen $C_{12}$-$C_{18}$ | 8,0 Teile |
| Dibutylzinndilaurat | 0,02 Teile |

### Komponente B

| | |
|---|---|
| Tripropylenglykol-modifiziertes 4,4'-Diisocyanatodiphenyl-methan, Isocyanatgehalt 23 Gew.-% | 25,5 Teile |

Die Halsbänder gemäß Beispiel 1 bis 5 werden nach dem Gießverfahren mit Hilfe einer Bandanlage kontinuierlich hergestellt. Polyether, Wirkstoff bzw. Wirkstoff-Kombination, Farbpaste, Zeolith-Paste, Spreitmittel und Butandiol-1,4 werden in einem beheizbaren Kessel zusammengemischt und auf 60 °C erwärmt. Danach wird der Katalysator (Dibutylzinndilaurat) zugemischt.

Die resultierende Mischung ist die Komponente A, die mit der Komponente B mittels eines Mischaggregates vermischt wird. Der Mischkopf ist auf einer hin- und hergehenden Changiervorrichtung befestigt. Aus dem Mischkopf fließt das Reaktionsgemisch kontinuierlich auf das Kunstleder (z. B. Beschichtung) oder auf ein Kunststoffband. Das Reaktionsgemisch beginnt 30 Sekunden nach Verlassen des Mischkopfes zu reagieren und ist nach ca. 60 Sekunden erhärtet.

Die Temperatur im Polyurethan-Material steigt innerhalb von 2 Minuten auf ca. 90 °C für die Dauer von 1 Minute.

Anschließend gleitet die Bandware durch eine Kühlzone. Das Produkt ist soweit verfestigt, daß es über ein System von langsam umlaufenden Keilriemen zur Schneidevorrichtung geleitet werden kann.

Aus den in den Beispielen 6-8 aufgeführten Kombinationen von Polyurethankomponenten, Spreitmitteln und Wirkstoffen werden jeweils Polyurethanmassen nach dem Prepolymerverfahren (über Isocyanatprepolymere) gegossen und dann granuliert. Die Granulate werden nach dem Spritzgußverfahren zu Halsbändern verarbeitet.

### Beispiel 6

40,4 Teile eines Polyesters aus Butandiol-1,4 und Adipinsäure (M.G. 2000)
5,14 Teile Butandiol-1,4 und 4,4'-Diphenylmethandiisocyamnat, in einer Menge, die einem NCO/OH-Verhältnis von 1,03 entspricht,
15 Teile Wirkstoff 1 und
18 Teile Isopropylmyristat.

### Beispiel 7

43,5 Teile eines Polyesters aus Ethylenglykol, Butandiol und Adipinsäure (M.G. 2000),
5,65 Teile Butandiol-1,4 und 4,4'-Diphenylmethandiisocyanat, in einer Menge, die einem NCO/OH-Verhältnis von 1,03 entspricht,
10 Teile Wirkstoff 1,
2,5 Teile Wirkstoff 2 und
15 Teile Laurinsäurehexylester.

### Beispiel 8

25 Teile eines Polypropylenglykoläthers (M.G. 2000)
25 Teile eines Polyesters aus Butandiol-1,4 und Adipinsäure (M.G. 2000)
4,5 Teile Butandiol-1,4 und 4,4'-Diphenylmethan diisocyanat, in einer Menge, die einem NCO/OH-Verhältnis von 1,03 entspricht,
10 Teile Wirkstoff 1,
5 Teile Wirkstoff 2 und
16 Teile Isopropylmyristat.

**0 050 782**

Beispiel 9

20 g Wirkstoff 1 werden in 50 g Methylethylketon bei Raumtemperatur unter gelegentlichem Umrühren gelöst. Dann werden 25 g N-Methylpyrrolidon und 15 Teile Isopropylmyrisat zugesetzt und in der so erhaltenen Mischung 25 g eines granulierten thermoplastischen Polyurethans gelöst.

Die Lösung wird zu einem Film von 1 mm Dicke gegossen und die Lösungsmittel in einem Trockenschrank bei 100 bis 150 °C im Verlauf von 60 Minuten entfernt. Es entsteht ein homogener, transparenter Film, aus welchem der Wirkstoff auch bei längerer Lagerung nicht ausblüht.

Das Polyurethan wurde durch Umsetzung von

100 Teilen eines Butandiol/Ethylenglykol-Adipinsäurepolyesters (OH-Zahl : 51,7),
7,5 Teilen 1,4-Butandiol und
31,3 Teilen 4,4'-Diisocyanatodiphenylmethan (NCO/OH = 0,97)

in einer Reaktionsschnecke gemäß DE-OS 2 302 564 hergestellt.

Vergleichsversuch 1

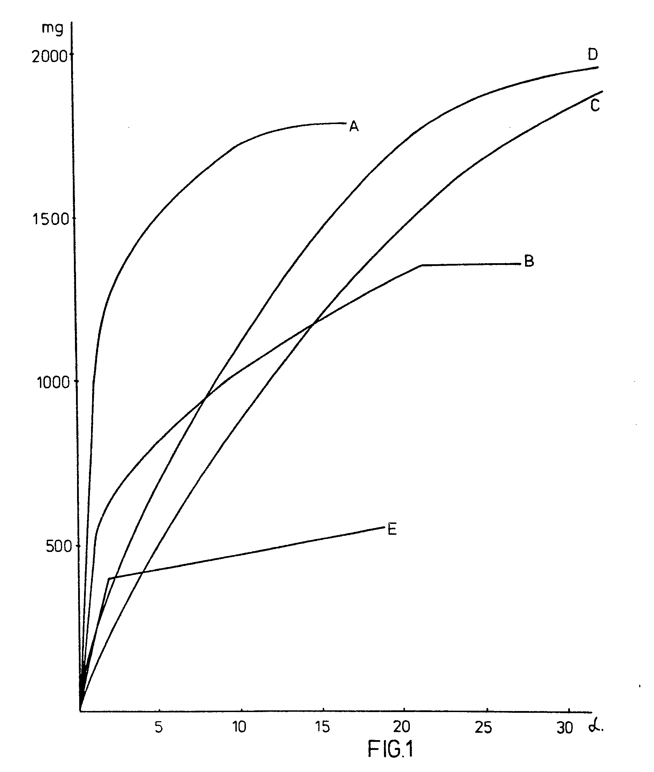

Die in vitro-Freisetzung (Wirkstoff-Freigabe) von Wirkstoff 1 der aus Beispiel 1 und 2 hergestellten erfindungsgemäßen Polyurethan-Systeme wurde in folgender Weise mit einem Propoxur enthaltenden, herkömmlichen PVC-Halsband verglichen (siehe Figur 1).

Die in vitro-Freisetzung des Wirkstoffs 1 wird über Wochen durch standardisierten und schonenden Abrieb mit Fellwalzen, der eine differenzierte Beurteilung verschiedener Systeme erlaubt, bestimmt.

Diese Tests entsprechen der Vorstellung eines mechanischen Wirkstoffabriebs auf dem Tier.

In Figur 1 ist auf der Ordinate die Wirkstoffabgabe in mg und auf der Abzisse die Zeit in Tagen aufgetragen. Die Kurven A, B, C, D und E bedeuten :

A = PVC-Band, 6 Monate gelagert bei Raumtemperatur, in Folie eingesiegelt,
B = PVC-Band
C = PUR-Band nach Beispiel 1
D = PUR-Band nach Beispiel 2
E = PUR-Band ohne Spreitmittel

Vergleichsversuch 2

Mit einem erfindungsgemäßen Hundehalsband wurde der folgende Langzeittest durchgeführt. Es wurde gegen herkömmliche PVC-Halsbänder verglichen.

| Wochen | 1 | 8-9 | 12-13 | 15 |
|---|---|---|---|---|
| Test : Flöhe | | | | |
| PVC-Band | 100 | 98 | 96 | 87 |
| PUR-Band mit Spreitmittel und Wirkstoff 1/2 im Verhältnis 10 %/2,5 % | 100 | 99 | 98 | 95 |
| Test : Zecken | | | | |
| PVC-Band | 100 | 67 | 43 | 29 |
| PUR-Band mit Spreitmittel und Wirkstoff 1/2 im Verhältnis 10 %/2,5 % | 100 | 90 | 78 | 72 |

**Ansprüche**

1. Ektoparasitizidhaltige Halsbänder für Haustiere aus einem hydrophoben in Wasser nicht quellbaren Polyurethan, dadurch gekennzeichnet, daß sie, bezogen auf das Polyurethan 2 bis 30 Gew.-% eines Ektoparasitizids oder einer Ektoparasitizidkombination, und bezogen auf das Polyurethan, 5-35 Gew.-% eines Spreitmittels enthalten.

2. Ektoparasitizidhaltige Halsbänder für Haustiere nach Anspruch 1, dadurch gekennzeichnet, daß

10

sie 2 bis 30 Gew.-% eines insektizid wirksamen Carbamats oder eines insektizid wirksamen synthetischen Pyrethroids oder 2 bis 30 Gew.-% dieser Wirkstoffe in Abmischungen enthalten.

3. Ektoparasitizidhaltige Halsbänder für Haustiere nach Anspruch 2, dadurch gekennzeichnet, daß sie 2 bis 30 Gew.-% eines Silikonöls oder eines Fettsäureesters oder eines Fettalkohols oder einer Fettsäure oder 2 bis 30 Gew.-% einer Mischung eines oder mehrerer dieser Spreitmittel enthalten.

4. Ektoparasitizidhaltige Halsbänder für Haustiere nach Anspruch 1, dadurch gekennzeichnet, daß das Polyurethan nach dem Gießverfahren herstellbar ist und bei 24-stündiger Lagerung in Wasser bei 20 °C weniger als 2 Gew.-% an Wasser durch Quellung aufnimmt.

5. Verwendung von Halsbändern nach Anspruch 1 zur Bekämpfung von Ektoparasiten an Haustieren.

6. Verfahren zur Herstellung von ektoparasitizidhaltigen Halsbändern für Haustiere aus thermoplastischen, hydrophoben, in Wasser nicht quellbaren Polyurethanen, dadurch gekennzeichnet, daß man das Polyurethan in Gegenwart von 2 bis 30 Gew.-% eines Ektoparasitizids oder einer Ektoparasitizidkombination und 5 bis 35 Gew.-% eines Spreitmittels, bezogen auf das Polyurethan, thermoplastisch zu Halsbändern formt.

7. Verfahren zur Herstellung von ektoparasitizidhaltigen Halsbändern für Haustiere aus hydrophoben in Wasser nicht quellbaren Polyurethanen, dadurch gekennzeichnet, daß man den Ausgangskomponenten des Polyurethans 2 bis 30 Gew.-% eines Ektoparasitizids oder einer Ektoparasitizidkombination und 5 bis 35 Gew.-% eines Spreitmittels, bezogen auf das Polyurethan, zusetzt und diese Mischung zu einem Polyurethan bei Reaktionstemperaturen, die die Zersetzungstemperatur des als Ektoparasitizid verwendeten Wirkstoffs nicht übersteigen, reagieren läßt.

8. Verfahren zur Herstellung ektoparasitizidhaltiger Halsbänder für Haustiere aus Polyurethanen nach Anspruch 6, dadurch gekennzeichnet, daß man die Halsbänder nach dem Gießverfahren herstellt.

9. Verfahren zur Herstellung ektoparasitizidhaltiger Halsbänder für Haustiere aus Polyurethanen nach Anspruch 7, dadurch gekennzeichnet, daß man das ektoparasitizidhaltige Reaktionsgemisch auf ein sich fortbewegendes Band aufgießt und gegebenenfalls rakelt.

10. Verfahren zur Herstellung ektoparasitizidhaltiger Halsbänder für Haustiere aus Polyurethanen nach Anspruch 9, dadurch gekennzeichnet, daß man die Halsbänder nach dem Einstufen-Verfahren herstellt.

## Claims

1. Ectoparasiticide-containing collars for domestic animals, consisting of a hydrophobic polyurethane which cannot be swollen in water, characterised in that they contain, relative to the polyurethane, 2 to 30 % by weight of an ectoparasiticide or of a combination of ectoparasiticides and, relative to the polyurethane, 5-35 % by weight of a spreading agent.

2. Ectoparasiticide-containing collars for domestic animals, according to Claim 1, characterised in that they contain 2 to 30 % by weight of an insecticidally active carbamate or of an insecticidally active synthetic pyrethroid, or 2 to 30 % by weight of these active compounds as mixtures.

3. Ectoparasiticide-containing collars for domestic animals, according to Claim 2, characterised in that they contain 2 to 30 % by weight of a silicone oil or fatty acid ester or fatty alcohol or fatty acid or 2 to 30 % by weight of a mixture of one or more of these spreading agents.

4. Ectoparasiticide-containing collars for domestic animals, according to Claim 1, characterised in that the polyurethane can be prepared by the casting process and, when kept in water at 20 °C for 24 hours, absorbs less than 2 % weight of water as a result of swelling.

5. Use of collars according to Claim 1 for combating ectoparasites on domesmtic animals.

6. Process for the production of ectoparasiticide-containing collars for domestic animals, from thermoplastic, hydrophobic polyurethanes which cannot be swollen in water, characterised in that the polyurethane is moulded thermoplastically into collars in the presence of 2 to 30 % by weight of an ectoparasiticide or of a combination of ectoparasiticides and 5 to 35 % by weight of a spreading agent, relative to the polyurethane.

7. Process for the production of ectoparasiticide-containing collars for domestic animals, from hydrophobic polyurethanes which cannot be swollen in water, characterised in that 2 to 30 % by weight of an ectoparasiticide or of a combination of ectoparasiticides and 5 to 35 % by weight of a spreading agent, relative to the polyurethane, are added to the starting components of the polyurethane and this mixture is allowed to react to form a polyurethane at reaction temperatures which do not exceed the decomposition temperature of the active compound used as the ectoparasiticide.

8. Process for the production of ectoparasiticide-containing collars for domestic animals, from polyurethanes, according to Claim 6, characterised in that the collars are produced by the casting process.

9. Process for the production of ectoparasiticide-containing collars for domestic animals, from polyurethanes, according to Claim 7, characterised in that the ectoparasiticide-containing reaction mixture is poured on to a forward-moving belt and if necessary spread with a doctor blade.

10. Process for the production of ectoparasiticide-containing collars for domestic animals, from polyurethanes, according to Claim 9, characterised in that the collars are produced by the single-stage process.

## Revendications

1. Colliers contenant un ectoparasiticide pour animaux domestiques, en polyuréthanne hydrophobe ne gonflant pas à l'eau, caractérisés en ce qu'ils contiennent 2 à 30 % en poids d'un ectoparasiticide ou d'une association d'ectoparasiticides, par rapport au polyuréthanne, et 5 à 35 % en poids d'un agent de dissémination par rapport au polyuréthanne.

2. Colliers contenant un ectoparasiticide pour animaux domestiques suivant la revendication 1, caractérisés en ce qu'ils contiennent 2 à 30 % en poids d'un carbamate à action insecticide ou d'un pyréthroïde synthétique à action insecticide ou 2 à 30 % en poids de ces substances en mélanges.

3. Colliers contenant un ectoparasiticide pour animaux domestiques suivant la revendication 2, caractérisés en ce qu'ils contiennent 2 à 30 % en poids d'une huile siliconée ou d'un ester d'acide gras ou d'un alcool gras ou d'un acide gras ou 2 à 30 % en poids d'un mélange d'un ou plusieurs de ces agents de dissémination.

4. Colliers contenant un ectoparasiticide pour animaux domestiques suivant la revendication 1, caractérisés en ce que le polyuréthanne peut être produit par le procédé de coulée et absorbe moins de 2 % en poids d'eau par gonflement lors d'un séjour d'une durée de 24 h dans de l'eau à 20 °C.

5. Utilisation de colliers suivant la revendication 1 pour combattre des ectoparasites chez des animaux domestiques.

6. Procédé de fabrication de colliers contenant un ectoparasiticide pour animaux domestiques à partir de polyuréthannes thermoplastiques hydrophobes ne gonflant pas à l'eau, caractérisé en ce qu'on procède au moulage thermoplastique, en forme de colliers, du polyuréthanne en présence de 2 à 30 % en poids d'un ectoparasiticide ou d'une association d'ectoparasiticides et de 5 à 35 % en poids d'un agent de dissémination, par rapport au polyuréthanne.

7. Procédé de fabrication de colliers contenant un ectoparasiticide pour animaux domestiques à partir de polyuréthannes hydrophobes ne gonflant pas à l'eau, caractérisé en ce qu'on ajoute aux composants de départ du polyuréthanne 2 à 30 % en poids d'un ectoparasiticide ou d'une association d'ectoparasiticides et 5 à 35 % en poids d'un agent de dissémination, par rapport au polyuréthanne, et on fait réagir ce mélange pour produire un polyuréthanne à des températures de réaction qui ne dépassent pas la température de décomposition de la substance active utilisée comme ectoparasiticide.

8. Procédé de production de colliers pour animaux domestiques contenant un ectoparasiticide à partir de polyuréthannes suivant la revendication 6, caractérisé en ce qu'on fabrique les colliers par le procédé de coulée.

9. Procédé de fabrication de colliers pour animaux domestiques contenant un ectoparasiticide à partir de polyuréthannes suivant la revendication 7, caractérisé en ce qu'on coule le mélange réactionnel contenant l'ectoparasiticide sur une bande en mouvement et on le racle le cas échéant.

10. Procédé de fabrication de colliers contenant un ectoparasiticide pour animaux domestiques à partir de polyuréthannes suivant la revendication 9, caractérisé en ce qu'on produit des colliers par le procédé à une seule étape.

FIG.1